# EUROPEAN PATENT SPECIFICATION

(11) **EP 4 610 136 B1**
(45) Date of publication and mention of the grant of the patent: **17.06.2026**
(21) Application number: 24305314.7
(22) Date of filing: 29.02.2024
(51) Int. Cl.: B60W 50/14, B60W 40/09, B60W 20/15

(54) **METHOD AND SYSTEM FOR VEHICLE MANAGEMENT**
VERFAHREN UND SYSTEM ZUR FAHRZEUGVERWALTUNG
PROCÉDÉ ET SYSTÈME DE GESTION DE VÉHICULE

(43) Date of publication of application: 03.09.2025
(73) Proprietor: TOYOTA JIDOSHA KABUSHIKI KAISHA, Toyota-shi, Aichi-ken, 471-8571 (JP)
(72) Inventor: VAN ACKER, Vincent, 00148 Rome (IT)
(74) Representative: Cabinet Beau de Loménie

(56) References cited:
- EP-A1- 3 225 490
- US-A1- 2014 081 490
- US-A1- 2015 336 586
- US-A1- 2019 344 665
- US-A1- 2022 161 678

## Description

### BACKGROUND OF THE INVENTION

### 1. Field of the invention

The present invention relates to the field of automotive industry, and is more specifically directed to a system and method for vehicle management of at least one vehicle having a fuel engine and an electric motor for propelling. In particular, the present invention relates to improving the driving of hybrid vehicles.

### 2. Description of Related Art

Nowadays, drivers are prompted to switch from conventional internal combustion engine vehicles to so-called hybrid vehicles, namely vehicles using a fuel engine and an electric motor for propelling. However, when transitioning to hybrid vehicles, the drivers are likely to keep their old driving habits, which may result in suboptimal driving because the features of the hybrid vehicles are not fully used. Therefore, there is room for improvement in hybrid vehicle management. For instance, US 2022/161678 and EP 3 225 490 disclose hybrid vehicles. US 2022/161678 discloses determining a ratio or the proportion of purely electric driving in an overall traveling distance and comparing said ratio with an electric driving proportion threshold.

### SUMMARY

In this respect, the present invention proposes a computer-implemented method for vehicle management of at least one vehicle having a fuel engine and an electric motor for propelling the at least one vehicle, the method comprising:
- acquiring, as a ratio, an electric driving ratio or a fuel driving ratio of the at least one vehicle, over a past travel distance of the at least one vehicle;
- providing feedback indicative of whether the acquired ratio reaches a threshold, wherein the threshold is determined based on driving history of the at least one vehicle.

Hereinafter, for the sake of conciseness, this method will be referred to as the management method.

The at least one vehicle may comprise a plurality of vehicle, e.g. two vehicles or more, three vehicles or more, ten vehicle or more, etc. As used herein, for conciseness and unless the context indicates otherwise, "a", "an", and "the" are intended to refer to "at least one" or "each" and to include plural forms as well. Conversely, generic uses of the plural form may include singular elements.

Both the fuel engine and the electric motor are involved in propelling the vehicle, i.e. providing mechanical energy that is transmitted to a driving member (e.g. wheels) of the vehicle. The fuel engine and the electric motor may be configured to operate simultaneously and/or separately.

The acquired ratio, namely the electric driving ratio and/or the fuel driving ratio, is information that quantifies a distribution between use of the electric motor and use of the fuel engine during driving. The electric driving ratio takes the viewpoint of use of the electric motor, and likewise, the fuel driving ratio takes the viewpoint of use of the fuel engine. The greater the electric driving ratio, the lesser the fuel driving ratio. Both the electric driving ratio and the fuel driving ratio are easily accessible data based on use of the electric motor and the fuel engine; therefore, the ratio can be acquired without computationally costly calculations.

The ratio is acquired over a past travel distance of the vehicle. That is, the ratio is not an instantaneous ratio but a ratio acquired based on a plurality of measurement points. For instance, the past travel distance may be 500 meters or more, 1 kilometer (km) or more, 10 km or more. Therefore, the ratio provides reliable information about the type of driving of a given vehicle.

Feedback is provided based on the acquired ratio. The ratio may be communicated as such or in comparison to at least one other value, e.g. a threshold. Yet in addition or alternatively, the feedback may be based on calculations performed on the acquired ratio. The feedback may be representative of the distribution between use of the electric motor and use of the fuel engine during driving for a given vehicle.

The feedback may be directly or indirectly provided to a driver of the vehicle, an owner of the vehicle, a user renting the vehicle, a related entity or the like. Based on the feedback about fuel/electric use over the past travel distance, a user of the vehicle is prompted to improve its driving, in particular to improve the distribution between use of the fuel engine and use of the electric motor. Therefore, the hybrid vehicle is used more efficiently and more safely. In particular, when used on a fleet of vehicles, the proposed management methods enables to statistically obtain improvements irrespective of the behaviors of some individual drivers. Further examples and details will be explained hereinafter.

Optionally, the at least one vehicle includes at least one of a rental vehicle and a share vehicle. A rental vehicle is a vehicle that a user can rent, the user keeping control of the vehicle over the renting period. As used herein, rental vehicles include lease vehicles. A share vehicle is a vehicle that is shared among a plurality of users, each user having the ability to use the vehicle over the sharing period insofar as it is not already used by other users. In the case of share vehicles or rental vehicles, the proposed management method helps the vehicle users to drive more efficiently and more safely and to take more care of the vehicles by driving the hybrid vehicles in a more appropriate way. Therefore, lifetime of the vehicles is increased. The rental vehicle and/or share vehicle may be a car.

Optionally, the feedback includes a privilege granted to a user of the at least one vehicle. Accordingly, the user of the vehicle is efficiently prompted to adjust their driving to reach a desired ratio. The privilege may be a financial advantage, a driving advantage (e.g. the ability to use dedicated lanes or gates), a gift or a reward.

Optionally, the privilege includes a fee adjustment on a rental fee for the at least one vehicle. The fee adjustment may include adjusting a fee of an existing rental contract and/or providing an incentive for subscribing a rental contract, such as a discount coupon or voucher.

The feedback is indicative of whether the acquired ratio reaches a threshold. Thus, the feedback is easy to understand for the recipient of the feedback, which makes the management method even more effective. The threshold may be reached by the acquired ratio becoming equal to or greater than the threshold, or by the acquired ratio becoming equal to or less than the threshold, depending on whether the threshold is a value to exceed or to remain below.

Optionally, said feedback is indicative of whether the acquired ratio is greater than or equal to a threshold. For instance, the feedback may be indicative of whether the electric driving ratio is greater than or equal to a threshold. Data analysis has shown that the higher the electric driving ratio, the less severe the accidents are, due to a smoother and more careful driving. Accordingly, providing feedback about whether the electric driving ratio is greater than or equal to a threshold (or, conversely, whether the fuel driving ratio is less than a threshold) effectively results in a decrease of accident severity. Furthermore, a greater use of the electric motor mitigates greenhouse gas emissions. Overall, this result in a safer driving.

Optionally, said feedback is indicative of whether the acquired ratio is less than or equal to a threshold. For instance, the feedback may be indicative of whether the electric driving ratio is less than or equal to a threshold. A lower electric driving ratio may increase the lifetime of the battery(ies) of the vehicle, or may be beneficial in specific driving conditions or environment or in specific circumstances, for example in cases where access to electric energy may be limited or where the cost of such energy may be high. Accordingly, providing feedback about whether the electric driving ratio is less than or equal to a threshold (or, conversely, whether the fuel driving ratio is greater than a threshold) may result in an increase of the battery lifetime, and therefore in a decrease of battery-related incidents, or may increase the autonomy or decrease the exploitation costs of the vehicle.

The threshold is determined based on driving history of the at least one vehicle. The driving history may be longer than the past travel distance. In these embodiments, the threshold is determined dynamically and prompts the driver to further improve over time.

Optionally, the ratio is acquired based on at least one of an electric motor turned-on ratio over the past travel distance and a fuel engine turned-on ratio over the past travel distance. The electric motor turned-on ratio is a share of the past travel distance over which the electric motor is turned on. Likewise, the fuel engine turned-on ratio is the share of the past travel distance over which the fuel engine is turned on. As mentioned previously, these shares can be determined in a simple manner, thus avoiding the need for complex calculations. The share may be calculated in terms of distance travelled by the vehicle and/or in terms of time period during which the electric motor and/or the fuel engine are turned on, in order to take into account states in which the vehicle is on but does not move (e.g. congested traffic).

Optionally, the ratio comprises a first electric driving ratio determined over a first predetermined period and a second electric driving ratio determined over a second predetermined period different from the first predetermined period, optionally wherein the feedback is indicative of whether the first electric driving ratio reaches a first threshold and/or the second electric driving ratio reaches a second threshold. In these embodiments, the feedback may be provided based on two different periods (or likewise two different past travel distances), in order to help the driver to adapt their driving in a regular and consistent manner not only over short periods but also over longer periods.

Optionally, the past travel distance is a distance run by the vehicle over a predetermined period. Thus, the past travel distance may be determined dynamically, which is not only better suited to different driving habits but also easier for the recipient of the feedback to interpret. For instance, the predetermined period may be one day, one week, one month, one year or the like.

Optionally, the feedback is provided to a driver of the at least one vehicle.

Optionally, the at least one vehicle includes at least one of a hybrid electric vehicle, a plug-in hybrid electric vehicle, a fuel-cell electric vehicle and a fuel-cell plug-in hybrid vehicle. Plug-in hybrid means that the battery of the vehicle may be charged with power external to the vehicle, whereas in non-plug-in hybrid vehicles, the battery may be charged only with power from the fuel engine and from regenerative braking. In fuel-cell vehicles, the fuel engine is a fuel cell, generally using hydrogen as a fuel.

The present invention is further directed to a system for vehicle management of at least one vehicle having a fuel engine and an electric motor for propelling the at least one vehicle, the system comprising a processor configured to:
- acquire, as a ratio, an electric driving ratio or a fuel driving ratio of the at least one vehicle, over a past travel distance of the at least one vehicle;
- provide feedback indicative of whether the acquired ratio reaches a threshold, wherein the threshold is determined based on driving history of the at least one vehicle.

The system may be configured to carry out the management method according to any one of the embodiments disclosed herein. The system may have the hardware structure of a computer.

The present invention is further directed to a computer program set including instructions for executing the steps of the management method when said program set is executed by at least one computer. This program set can use any programming language and take the form of source code, object code or a code intermediate between source code and object code, such as a partially compiled form, or any other desirable form.

The present invention is further directed to a recording medium readable by at least one computer and having recorded thereon at least one computer program including instructions for executing the steps of the management method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a diagram depicting a system for vehicle management of at least one vehicle according to an embodiment;
- FIG.2 is a diagram depicting a method for vehicle management of at least one vehicle according to an embodiment.

### DETAILED DESCRIPTION OF EMBODIMENTS

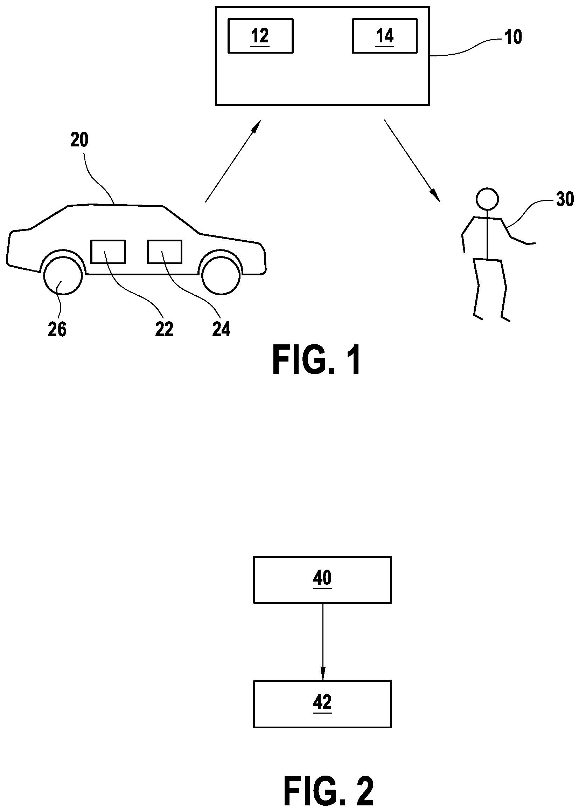

A system 10 for vehicle management of at least one vehicle 20 according to an embodiment is shown in Fig. 1. The system 10 may comprise an electronic circuit, a processor (shared, dedicated, or group) 12, a combinational logic circuit, a memory 14 that executes one or more software programs, and/or other suitable components that provide the described functionality. In other words, the system 10 may be a computer device.

The memory 14 may store data, e.g. one or more computer programs which, when executed, carry out the management method according to the present disclosure. The memory 14 may act as a recording medium readable by at least one computer and having recorded thereon at least one computer program including instructions for executing the steps of the management method.

The system 10 may be configured to execute the steps of the management method, which are illustrated in Fig. 2 and will be detailed later on.

The system 10 may be configured to acquire data from at least one vehicle 20. Although a single vehicle 20 is shown in Fig. 1 for readability, the system 10 may be configured to acquire data from a plurality of vehicles 20.

The system 10 and the vehicle 20 may be equipped with respective communications modules, e.g. wireless communication modules, which can be designed appropriately by the skilled person. In particular, the processor 12 is configured to acquire, as a ratio, an electric driving ratio or a fuel driving ratio of the at least one vehicle 20, over a past travel distance of the at least one vehicle 20.

In this embodiment, the vehicle 20 is a vehicle comprising a fuel engine 22 and an electric motor 24 for propelling the vehicle 20. The fuel engine 22 and the electric motor 24 may be connected to a common transmission (e.g. drive train) for providing mechanical power to a driving member of the vehicle 20, such as the wheels 26. During driving, mechanical power to the wheels 26 may originate from either one or both of the fuel engine 22 and the electric motor 24, depending on the amount of required power and other parameters that may be determined by a vehicle control unit.

The fuel engine 22 may use any type of fuel, e.g. diesel, gasoline, synthetic fuel, hydrogen, etc.

For instance, the at least one vehicle 20 includes at least one of a hybrid electric vehicle, a plug-in hybrid electric vehicle, a fuel-cell electric vehicle and a fuel-cell plug-in hybrid vehicle. In case of a plurality of vehicles 20, the vehicles 20 may be of the same type or of different types.

In Fig. 1, the vehicle 20 is illustrated as a car. However, other types of vehicles are encompassed as long as they comprise a fuel engine 22 and an electric motor 24. Besides, the vehicle 20 may comprise a plurality of electric motors, however these will be collectively regarded as a single electric motor in the present disclosure.

For instance, as described above, the vehicle 20 may be a rental vehicle or a share vehicle. The rental or sharing contract may be subscribed by a driver of the vehicle 20 or a person other than the driver of the vehicle 20.

In an embodiment, the electric driving ratio is a ratio that quantifies a relative use of the electric motor during a past travel distance of the vehicle 20. The electric driving ratio may be calculated in terms of distance (e.g. as a ratio of distances), or in terms of duration of use of the electric motor 24 (e.g. as a ratio of durations), or yet in terms of mechanical power (e.g. as a ratio of powers). The past travel distance may be a preset distance or a dynamically determined distance, e.g. a distance run by the vehicle 20 over a predetermined period. The predetermined period may be a fixed period, e.g. one day, one month or the like, or a variable period, e.g. the time period from the vehicle 20 being turned on to the vehicle 20 being turned off (e.g. the latest journey of the vehicle 20).

For instance, the electric driving ratio may be calculated as a ratio of the portion of the past travel distance travelled with only the electric motor 24 being turned on (i.e. with the fuel engine being turned off), to the whole past travel distance. In other words, the electric driving ratio may quantify the percentage of the past travel distance that used exclusively the electric motor 24. In another example, the electric driving ratio may quantity the percentage of the past travel distance that used at least the electric motor 24 (e.g. with the electric motor 24 being turned on, irrespective of the state of the fuel engine 22).

Instead of or in addition to the electric driving ratio, the fuel driving ratio may be used likewise. The above comments and examples about the electric driving ratio apply similarly to the fuel driving ratio, mutatis mutandis.

More generally, the ratio may be acquired based on at least one of an electric motor turned-on ratio over the past travel distance and a fuel engine turned-on ratio over the past travel distance. In the above example in which the electric driving ratio quantifies the percentage of the past travel distance that used exclusively the electric motor 24, the electric driving ratio may be simply calculated as the relative distance during which the electric motor 24 is turned on and the fuel engine 22 is turned off. Signals indicating the state of the fuel engine 22 and the electric motor 24 can be accessed easily, and therefore, the calculation of the ratio is computationally inexpensive.

In yet another example, the electric driving ratio may be calculated as a ratio of the mechanical power provided by the electric motor 24 to the sum of the mechanical power provided by the fuel engine 22 and the mechanical power provided by the electric motor 24.

The processor 12 may be configured to acquire different ratio based on different past travel distances. For instance, the acquired ratio may comprise a first electric driving ratio determined over a first predetermined period, e.g. the last day or week, and a second electric driving ratio determined over a second predetermined period different from the first predetermined period, e.g. the last month or year, or the full travel history of the vehicle 20.

As mentioned earlier, the system 10 is further configured to provide feedback based on the acquired ratio. The feedback may be provided to a user 30, who may be a driver of the vehicle 20, e.g. through appropriate communication modules. For instance, the system 10 may wirelessly communicate with a fixed or mobile terminal of the user 30, e.g. a smartphone. Optionally, the terminal may be installed in the vehicle 20. Besides, the feedback may be displayed to the user 30, e.g. to the driver, e.g. by the vehicle 20 or a user's terminal.

In an embodiment, the feedback may comprise the value of the acquired ratio.

However, the value of the acquired ratio may be difficult for the user to understand. Therefore, in addition or alternatively, the feedback may be indicative of whether the acquired ratio reaches a threshold. The feedback may include the value of the acquired ratio and the threshold for the user to compare, and/or the result of the comparison between the acquired ratio and the threshold, and/or data calculated based on the comparison.

An example in which the acquired ratio, e.g. the electric driving ratio, should be greater than or equal to a threshold is detailed below. The feedback may comprise some positive indication that the threshold was reached if the electric driving ratio was greater than or equal to the threshold over the past travel distance, and may not comprise the positive indication (or may comprise some negative indication) otherwise.

As a positive indication, the feedback may comprise a privilege granted to the user 30 of the vehicle 20. For instance, if the vehicle 20 is a rental vehicle or a share vehicle, the privilege may include a fee adjustment on a rental fee for the vehicle 20 for the current renting/sharing contract of the vehicle 20. Alternatively or in addition, and irrespective of whether the vehicle 20 is a rental vehicle or a share vehicle, the privilege may include a fee adjustment for a future rental/sharing subscription. In this way, the user 30 is efficiently prompted to drive in a way that uses more the electric motor 24. For instance, the greater the electric driving ratio, the cheaper the rental fee.

For instance, the rental fee may be calculated as the sum of a base cost and a distance-related cost (e.g. a per-kilometer cost), wherein the distance-related cost is weighted by the acquired ratio. In an example in which the vehicle 20 is rented on a monthly basis, the base cost may be 300€/month and the distance-related cost may be 0.1€/km if the fuel engine 22 is turned off (which implies that the electric motor 24 is turned on) and 0.2€/km if the fuel engine 22 is turned on (irrespective of the state of the electric motor 24). The total rental cost will be 300€ + 0.1€ x (distance with fuel engine turned off) + 0.2€ x (distance with fuel engine turned on), and can also be expressed as 300€ + 0.1€ x (past travel distance) x (2 - electric driving ratio). However, other formulas may be used to adjust the rental fee based on the acquired ratio.

Analyses conducted by the inventors have revealed that the electric driving ratio has a positive impact in terms of accident risk reduction. The greater the electric driving ratio, the less severe the accidents. Therefore, thanks to the proposed management method, a safer driving can be promoted, all the more so at a statistical level for a plurality of vehicles.

However, in other embodiments, the feedback may be indicative of whether the acquired ratio is less than or equal to a threshold. In an example, the same effects as above can be obtained if the fuel driving ratio is less than or equal to a threshold. In another example, if the electric driving ratio is less than or equal to a threshold, other effects can be obtained, e.g. limiting intensive use of the battery and therefore reducing battery-related incidents. In specific circumstances, it may also increase the autonomy or decrease the exploitation costs of the vehicle, all the more so at a statistical level for a plurality of vehicles.

The above-mentioned threshold may be fixed or not. In an example, the threshold may be determined for each vehicle 20 based on the vehicle's characteristics, depending on the driver and/or depending on the subscription in the case of a rental or share vehicle. For instance, the threshold may be based on driving history of the vehicle 20. The threshold may be given the value of the acquired ratio over the driving history of the vehicle 20, increased or decreased by a fixed value or a relative value (e.g. a percentage). Thus, the driving history is taken as a reference, and the driver is prompted to improve their driving over time.

Specifically, in the above-mentioned example of a first electric driving ratio determined over a first predetermined period and a second electric driving ratio determined over a second predetermined period different from the first predetermined period, the second predetermined period may be the driving history of the vehicle 20 and the feedback may be based on comparing the first electric driving ratio to the second electric driving ratio.

In other embodiments, the feedback may be indicative of whether the first electric driving ratio reaches a first threshold and/or the second electric driving ratio reaches a second threshold. For instance, in order to avoid unsteady driving, the privilege may be granted only if the threshold is reached not only over the past week but also over the past month. Thus, taking different periods into account results in a steadier driving for the vehicles 20.

Figure 2 shows the steps of the management method according to an embodiment, namely a computer-implemented method for vehicle management of at least one vehicle 20 having a fuel engine 22 and an electric motor 24 for propelling the at least one vehicle. The method comprises a first step 40 of acquiring, as a ratio, an electric driving ratio or a fuel driving ratio of the at least one vehicle 20, over a past travel distance of the at least one vehicle 20, and a second step 42 of providing feedback based on the acquired ratio. These steps may be implemented as discussed above with respect to the system 10.

Although the present disclosure refers to specific exemplary embodiments, modifications may be provided to these examples without departing from the general scope of the invention as defined by the claims. Therefore, the description and the drawings should be considered in an illustrative rather than in a restrictive sense.

## Claims

1. A computer-implemented method for vehicle management of at least one vehicle (20) having a fuel engine (22) and an electric motor (24) for propelling the at least one vehicle (20), the method comprising:
- acquiring, as a ratio, an electric driving ratio or a fuel driving ratio of the at least one vehicle (20), over a past travel distance of the at least one vehicle;
- providing feedback indicative of whether the acquired ratio reaches a threshold, **characterised in that** the threshold is determined based on driving history of the at least one vehicle (20).

2. The method of claim 1, wherein the at least one vehicle (20) includes at least one of a rental vehicle and a share vehicle.

3. The method of claim 1 or 2, wherein the feedback includes a privilege granted to a user of the at least one vehicle (20), optionally wherein the privilege includes a fee adjustment on a rental fee for the at least one vehicle.

4. The method of any one of claims 1 to 3, wherein said feedback is indicative of whether the acquired ratio is greater than or equal to a threshold.

5. The method of any one of claims 1 to 3, wherein said feedback is indicative of whether the acquired ratio is less than or equal to a threshold.

6. The method of any one of claims 1 to 5, wherein the ratio is acquired based on at least one of an electric motor turned-on ratio over the past travel distance and a fuel engine turned-on ratio over the past travel distance.

7. The method of any one of claims 1 to 6, wherein the ratio comprises a first electric driving ratio determined over a first predetermined period and a second electric driving ratio determined over a second predetermined period different from the first predetermined period, optionally wherein the feedback is indicative of whether the first electric driving ratio reaches a first threshold and/or the second electric driving ratio reaches a second threshold.

8. The method of any one of claims 1 to 7, wherein the past travel distance is a distance run by the at least one vehicle (20) over a predetermined period.

9. The method of any one of claims 1 to 8, wherein the feedback is provided to a driver of the at least one vehicle (20).

10. The method of any one of claims 1 to 9, wherein the at least one vehicle (20) includes at least one of a hybrid electric vehicle, a plug-in hybrid electric vehicle, a fuel-cell electric vehicle and a fuel-cell plug-in hybrid vehicle.

11. A system (10) for vehicle management of at least one vehicle (20) having a fuel engine (22) and an electric motor (24) for propelling the at least one vehicle, the system comprising a processor (12) configured to:
- acquire, as a ratio, an electric driving ratio or a fuel driving ratio of the at least one vehicle (20), over a past travel distance of the at least one vehicle;
- provide feedback indicative of whether the acquired ratio reaches a threshold, **characterised in that** the threshold is determined based on driving history of the at least one vehicle (20).

12. A computer program set including instructions for executing the steps of the method of any one of claims 1 to 10 when said program set is executed by at least one computer.

13. A recording medium readable by at least one computer and having recorded thereon at least one computer program including instructions for executing the steps of the method of any one of claims 1 to 10.

## Patentansprüche

1. Computerimplementiertes Verfahren für das Fahrzeugmanagement mindestens eines Fahrzeugs (20), das einen Verbrennungsmotor (22) und einen Elektromotor (24) zum Antreiben des mindestens einen Fahrzeugs (20) aufweist, wobei das Verfahren umfasst:
- Erfassen, als ein Verhältnis, eines Elektroantriebsverhältnisses oder eines Kraftstoffantriebsverhältnisses des mindestens einen Fahrzeugs (20) über eine zurückgelegte Fahrtdistanz des mindestens einen Fahrzeugs,
- Bereitstellen einer Rückmeldung, die angibt, ob das erfasste Verhältnis eine Schwelle erreicht, **dadurch gekennzeichnet, dass** die Schwelle auf der Grundlage der Fahrhistorie des mindestens einen Fahrzeugs (20) bestimmt wird.

2. Verfahren nach Anspruch 1, wobei das mindestens eine Fahrzeug (20) mindestens eines von einem Mietfahrzeug und einem Carsharing-Fahrzeug umfasst.

3. Verfahren nach Anspruch 1 oder 2, wobei die Rückmeldung ein Sonderrecht umfasst, das einem Benutzer des mindestens einen Fahrzeugs (20) gewährt wird, wobei optional das Sonderrecht eine Gebührenanpassung einer Mietgebühr für das mindestens eine Fahrzeug umfasst.

4. Verfahren nach einem der Ansprüche 1 bis 3, wobei die Rückmeldung angibt, ob das erfasste Verhältnis größer als oder gleich einer Schwelle ist.

5. Verfahren nach einem der Ansprüche 1 bis 3, wobei die Rückmeldung angibt, ob das erfasste Verhältnis kleiner als oder gleich einer Schwelle ist.

6. Verfahren nach einem der Ansprüche 1 bis 5, wobei das Verhältnis auf der Grundlage mindestens eines von einem Elektromotor-Einschaltdauerverhältnis über die zurückgelegte Fahrtdistanz und einem Verbrennungsmotor-Einschaltdauerverhältnis über die zurückgelegte Fahrtdistanz umfasst.

7. Verfahren nach einem der Ansprüche 1 bis 6, wobei das Verhältnis ein erstes Elektroantriebsverhältnis, das über einen ersten zuvor festgelegten Zeitraum bestimmt wird, und ein zweites Elektroantriebsverhältnis, das über einen zweiten zuvor festgelegten Zeitraum bestimmt wird, der sich von dem ersten zuvor festgelegten Zeitraum unterscheidet, umfasst, wobei die Rückmeldung optional angibt, ob das erste Elektroantriebsverhältnis eine erste Schwelle erreicht und/oder ob das zweite Elektroantriebsverhältnis eine zweite Schwelle erreicht.

8. Verfahren nach einem der Ansprüche 1 bis 7, wobei die zurückgelegte Fahrtdistanz eine Distanz ist, die das mindestens eine Fahrzeug (20) über einen zuvor festgelegten Zeitraum zurückgelegt hat.

9. Verfahren nach einem der Ansprüche 1 bis 8, wobei die Rückmeldung einem Fahrer des mindestens einen Fahrzeugs (20) übermittelt wird.

10. Verfahren nach einem der Ansprüche 1 bis 9, wobei das mindestens eine Fahrzeug (20) mindestens eines von einem Hybrid-Elektrofahrzeug, einem Plug-in-Hybrid-Elektrofahrzeug, einem Brennstoffzellen-Elektrofahrzeug und einem Brennstoffzellen-Plug-in-Hybridfahrzeug umfasst.

11. System (10) für das Fahrzeugmanagement mindestens eines Fahrzeugs (20), das einen Verbrennungsmotor (22) und einen Elektromotor (24) zum Antreiben des mindestens einen Fahrzeugs aufweist, wobei das System einen Prozessor (12) umfasst, der ausgebildet ist zum:
- Erfassen, als ein Verhältnis, eines Elektroantriebsverhältnisses oder eines Kraftstoffantriebsverhältnisses des mindestens einen Fahrzeugs (20) über eine zurückgelegte Fahrtdistanz des mindestens einen Fahrzeugs,
- Bereitstellen einer Rückmeldung, die angibt, ob das erfasste Verhältnis eine Schwelle erreicht, **dadurch gekennzeichnet, dass** die Schwelle auf der Grundlage der Fahrhistorie des mindestens einen Fahrzeugs (20) bestimmt wird.

12. Computerprogrammsatz, der Instruktionen enthält, um die Schritte des Verfahrens nach einem der Ansprüche 1 bis 10 auszuführen, wenn der Programmsatz durch mindestens einen Computer ausgeführt wird.

13. Aufzeichnungsmedium, das durch mindestens einen Computer lesbar ist und auf dem mindestens ein Computerprogramm aufgezeichnet ist, das Instruktionen zum Ausführen der Schritte des Verfahrens nach einem der Ansprüche 1 bis 10 enthält.

## Revendications

1. Procédé mis en œuvre par ordinateur pour une gestion de véhicule d'au moins un véhicule (20) ayant un moteur à carburant (22) et un moteur électrique (24) pour propulser l'au moins un véhicule (20), le procédé comprenant :
- l'acquisition, comme rapport, d'un rapport de conduite électrique ou d'un rapport de conduite avec carburant de l'au moins un véhicule (20), sur une distance de déplacement passé de l'au moins un véhicule ;
- la fourniture d'une rétroaction indicative du fait que le rapport acquis atteint un seuil,
**caractérisé en ce que**
le seuil est déterminé sur la base d'un historique de conduite de l'au moins un véhicule (20).

2. Procédé selon la revendication 1, selon lequel le au moins un véhicule (20) comprend au moins un d'un véhicule de location et d'un véhicule partagé.

3. Procédé selon la revendication 1 ou 2, selon lequel la rétroaction comprend un privilège accordé à un utilisateur de l'au moins un véhicule (20), le privilège comprenant optionnellement un ajustement de frais sur des frais de location pour l'au moins un véhicule.

4. Procédé selon l'une quelconque des revendications 1 à 3, selon lequel ladite rétroaction est indicative du fait que le rapport acquis est supérieur ou égal à un seuil.

5. Procédé selon l'une quelconque des revendications 1 à 3, selon lequel ladite rétroaction est indicative du fait que le rapport acquis est inférieur ou égal à un seuil.

6. Procédé selon l'une quelconque des revendications 1 à 5, selon lequel le rapport est acquis sur la base d'au moins un d'un rapport de moteur électrique en marche par rapport à la distance de déplacement passé et d'un rapport de moteur à carburant en marche par rapport à la distance de déplacement passé.

7. Procédé selon l'une quelconque des revendications 1 à 6, selon lequel le rapport comprend un premier rapport de conduite électrique déterminé sur une première période prédéterminée et un deuxième rapport de conduite électrique déterminé sur une deuxième période prédéterminée différente de la première période prédéterminée, la rétroaction étant optionnellement indicative du fait que le premier rapport de conduite électrique atteint un premier seuil et/ou le deuxième rapport de conduite électrique atteint un deuxième seuil.

8. Procédé selon l'une quelconque des revendications 1 à 7, selon lequel la distance de déplacement passé est une distance parcourue par l'au moins un véhicule (20) sur une période prédéterminée.

9. Procédé selon l'une quelconque des revendications 1 à 8, selon lequel la rétroaction est fournie à un conducteur de l'au moins un véhicule (20).

10. Procédé selon l'une quelconque des revendications 1 à 9, selon lequel l'au moins un véhicule (20) comprend au moins un d'un véhicule électrique hybride, d'un véhicule électrique hybride rechargeable, d'un véhicule électrique à pile à combustible et d'un véhicule hybride rechargeable à pile à combustible.

11. Système (10) pour la gestion de véhicule d'au moins un véhicule (20) ayant un moteur à carburant (22) et un moteur électrique (24) pour propulser l'au moins un véhicule, le système comprenant un processeur (12) configuré pour :
- acquérir, comme rapport, un rapport de conduite électrique ou un rapport de conduite avec carburant de l'au moins un véhicule (20), sur une distance de déplacement passé de l'au moins un véhicule ;
- fournir une rétroaction indicative du fait que le rapport acquis atteint un seuil,
**caractérisé en ce que** le seuil est déterminé sur la base d'un historique de conduite de l'au moins un véhicule (20).

12. Ensemble de programme informatique comprenant des instructions pour exécuter les étapes du procédé selon l'une quelconque des revendications 1 à 10 quand ledit ensemble de programme est exécuté par au moins un ordinateur.

13. Support d'enregistrement lisible par au moins un ordinateur et ayant enregistré dessus au moins un programme informatique comprenant des instructions pour exécuter les étapes du procédé selon l'une quelconque des revendications 1 à 10.
